# EUROPEAN PATENT APPLICATION

(11) **EP 3 588 037 A1**
(43) Date of publication of application: **01.01.2020**
(21) Application number: 19181194.2
(22) Date of filing: 19.06.2019
(51) Int. Cl.: G01L 1/00, G01B 7/16, H01B 3/00, H01B 7/02, H01B 11/18, H02N 1/04

(54) **CABLE AND TWO-CORE CABLE**

(30) Priority: 25.06.2018 JP 2018119731; 03.12.2018 JP 2018226212
(71) Applicant: Hosiden Corporation, Yao-shi, Osaka 581-0071 (JP)
(72) Inventor: INOUE, Ryo, Yao-shi, Osaka 581-0071 (JP); EMA, Hiroshi, Yao-shi, Osaka 581-0071 (JP)
(74) Representative: MERH-IP Matias Erny Reichl Hoffmann Patentanwälte PartG mbB

(57) **Abstract**

A cable includes: a core; a first insulating layer that has a property biased toward positive polarity or negative polarity in a triboelectric series and coats the core; an (n+1)-th insulating layer that has a property biased toward a polarity opposite to a polarity of an n-th insulating layer and coats the n-th insulating layer, N being a natural number not less than 2, n being 1, ..., N-l; a braid that coats the N-th insulating layer; and a sheath that coats the braid.

## Description

### [TECHNICAL FIELD]

The present invention relates to a cable and a two-core cable.

### [BACKGROUND ART]

For example, Japanese Patent Application Laid Open No. 2014-217130 (hereinafter referred to as "Patent Literature 1") is available as a prior art literature pertinent to a vibration power generator. A vibration power generator according to Patent Literature 1 has an electret dielectric and an electrode which are arranged so as to face each other and is marked by variation of a distance between the electret dielectric and the electrode. Insertion of an insulating layer between the electret dielectric and the electrode prevents direct contact between the two components and inhibits transfer of charge between the two components.

Paragraph [0073] of Patent Literature 1 discloses that utilization of an electrification phenomenon due to repeated contact between insulating layers, repeated peeling of one from the other, or repeated friction between the two suffers a problem in that power may not be generated or generated power output may be low in an early stage.

### [SUMMARY OF THE INVENTION]

The vibration power generator according to Patent Literature 1 uses an electret dielectric. When the vibration power generator is heated, electret charge is lost, and the vibration power generator becomes inoperative, which is a problem. The vibration power generator according to Patent Literature 1 also suffers the problem of the high cost of electrification processing.

Under the above-described circumstances, an object of the present invention is to provide a cable which is resistant to heating, does not require electrification processing, and senses applied force through power generation.

A cable according to the present invention includes: a core; a first insulating layer that has a property biased toward positive polarity or negative polarity in a triboelectric series and coats the core; an (n+1)-th insulating layer that has a property biased toward a polarity opposite to a polarity of an n-th insulating layer and coats the n-th insulating layer, N being a natural number not less than 2, n being 1, ..., N-1; a braid that coats the N-th insulating layer; and a sheath that coats the braid.

### [EFFECTS OF THE INVENTION]

The cable according to the present invention is resistant to heating, does not require electrification processing, and senses applied force through power generation.

### [BRIEF DESCRIPTION OF THE DRAWINGS]

Fig. 1 is a cross-sectional view of a cable according to a first embodiment.
Fig. 2 shows graphs showing the progression of output voltages when force is applied to cables at time 0, Fig. 2(A) is a graph showing the progression of an output voltage from a cable having one insulating layer, and Fig. 2(B) is a graph showing the progression of an output voltage from the cable according to the first embodiment.
Fig. 3 is a chart representing a triboelectric series.
Fig. 4 shows charts showing in-cable electrification statuses when external force is applied to cables, Fig. 4(A) is a chart showing an electrification status of the cable according to the first embodiment, and Fig. 4(B) is a chart showing an electrification status of a cable provided with an electret layer.
Fig. 5 is a cross-sectional view of a cable according to a second embodiment.
Fig. 6 is a cross-sectional view of a cable according to a third modification.
Fig. 7 shows graphs for comparison between a noise-reduction effect in a case where a single-core cable is used and a noise-reduction effect in a case where a two-core cable is used, Fig. 7(A) is a graph representing change in noise amount over time in the case where the single-core cable is used, and Fig. 7(B) is a graph representing change in noise amount over time in the case where the two-core cable is used.

### [DETAILED DESCRIPTION OF THE EMBODIMENTS]

Embodiments of the present invention will be described below in detail.

### [FIRST EMBODIMENT]

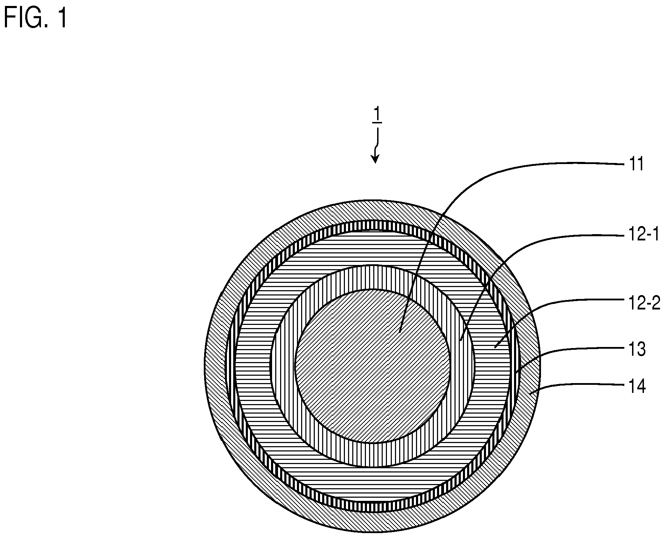

A structure of a cable according to a first embodiment will be described below with reference to Fig. 1. As shown in Fig. 1, a cable 1 according to the present embodiment is structured to include a core 11, a first insulating layer 12-1, a second insulating layer 12-2, a braid 13, and a sheath 14.

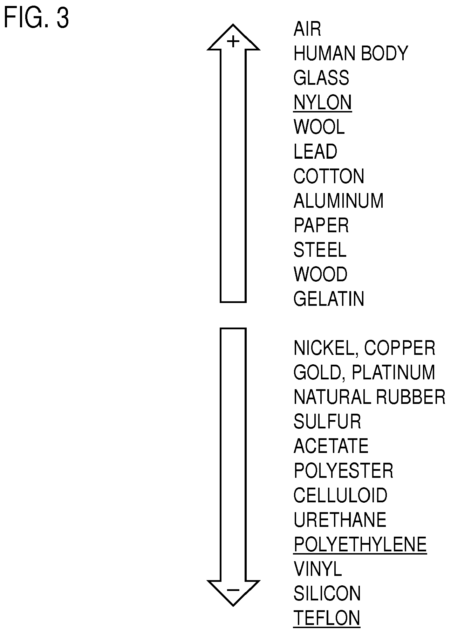

The first insulating layer 12-1 has a property biased toward positive polarity or negative polarity in a triboelectric series (Fig. 3) and coats the core 11. The second insulating layer 12-2 has a property biased toward a polarity opposite to a polarity of the first insulating layer 12-1 and coats the first insulating layer 12-1. The braid 13 coats the second insulating layer 12-2, and the sheath 14 coats the braid 13.

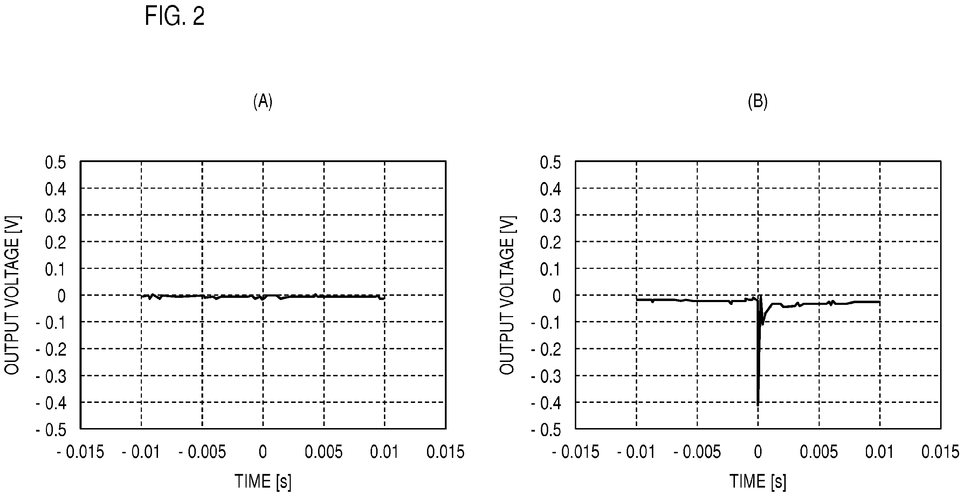

As shown in Fig. 2(A), an output voltage shows little change in a cable having only one insulating layer when force is applied to the cable at time 0. In contrast, as shown in Fig. 2(B), an output voltage varies greatly near time 0 in a cable having two insulating layers opposite in polarity when force is applied to the cable at time 0.

It is preferable to output a voltage between two terminals which are a terminal connected to a conductor (the core 11) and a terminal connected to the braid 13 in the cable 1 according to the present embodiment. In this case, it is preferable that the two terminals are connected to an impedance conversion circuit, such as an FET, and that a pressure-sensitive sensor is connected to the impedance conversion circuit. Connections between the conductor (the core 11) and the braid 13 and the impedance conversion circuit, such as an FET, are likely to pick up electromagnetic noise, and the portions are preferably shielded.

It is further preferable to form asperities on an outer side surface and on an inner side surface of insulating layers in order that the insulating layers may be well rubbed together when external force is applied to a cable

(the cable is bent). Since the cable 1 according to the present embodiment is structured such that an outer side surface of the first insulating layer 12-1 is in contact with an inner side surface of the second insulating layer 12-2, it is preferable to form asperities on the outer side surface of the first insulating layer 12-1 and on the inner side surface of the second insulating layer 12-2.

Additionally, appropriate selection of materials for the first insulating layer 12-1 and the second insulating layer 12-2 in view of a relationship between frictional electrification rates allows increase in an output voltage resulting from electrification and improvement in the accuracy of detecting cable deformation. For example, the accuracy of detecting cable deformation can be enhanced by adopting Teflon (a registered trademark) having negative polarity as the material for the first insulating layer 12-1 and nylon having positive polarity as the material for the second insulating layer 12-2. The same applies to a case where the materials are interchanged (for example, nylon is adopted as the material for the first insulating layer 12-1, and Teflon is adopted as the material for the second insulating layer 12-2). Additionally, for example, the accuracy of detecting cable deformation can be enhanced by adopting polyethylene having negative polarity as the material for the first insulating layer 12-1 and nylon having positive polarity as the material for the second insulating layer 12-2. The same applies to a case where the materials are interchanged (for example, nylon is adopted as the material for the first insulating layer 12-1, and polyethylene is adopted as the material for the second insulating layer 12-2).

Use of fluorocarbon resin (Teflon) for the first insulating layer 12-1 allows the core 11 and the second insulating layer 12-2 to peel off easily from each other. Additionally, use of the braid 13 as an outer electrode allows the second insulating layer 12-2 and the braid 13 to peel off easily from each other.

Note that use of a high-melting-point material for the inner first insulating layer 12-1 and a low-melting-point material for the outer second insulating layer 12-2 makes it possible to mold the insulating layers through extrusion molding.

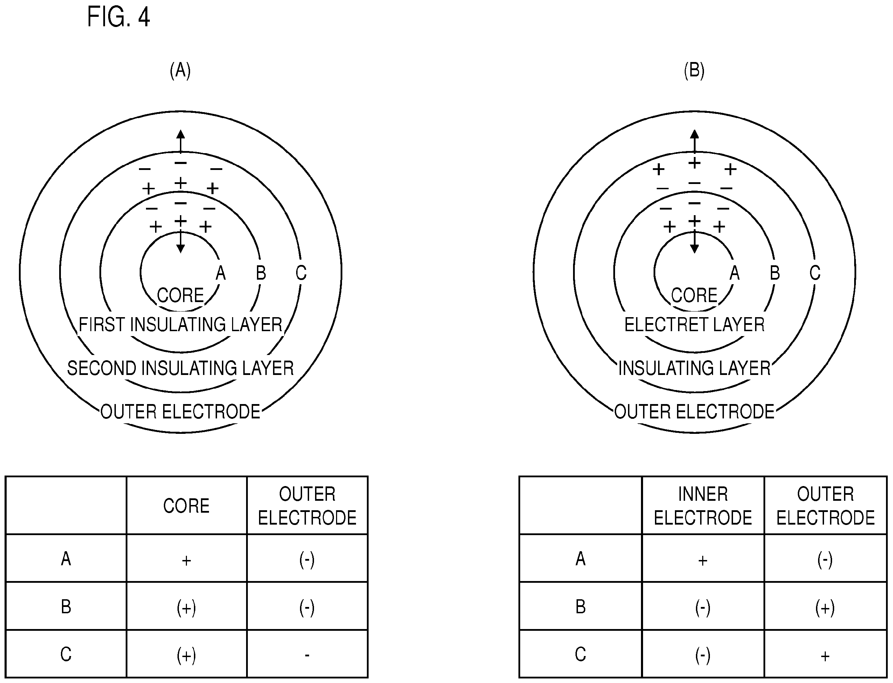

An electrification status inside the cable 1 according to the present embodiment will be compared with an electrification status inside a cable, which is obtained by replacing the first insulating layer of the cable 1 according to the present embodiment with an electret layer, below with reference to Fig. 4. Since it is generally desirable that an electret layer and an insulating layer are the same in electrification polarity, polarities of two layers are set to negative (-) in the example shown in Fig. 4(B).

As shown in Fig. 4(A), interfaces A to C tend to be identical in polarities of generated charges in the cable 1 according to the present embodiment when external force is applied (see the table in Fig. 4(A); a sign in parentheses represents weak electrification). In contrast, as shown in Fig. 4(B), interfaces A, B, and C respectively have a polarity of +, a polarity of (-), and a polarity of (-), on inner electrode sides in the cable with the electret layer replacing the first insulating layer when external force is applied, while interfaces A, B, and C respectively have a polarity of (-), a polarity of (+), and a polarity of +, on outer electrode sides. For this reason, generated charges cancel out each other, which is a factor that decreases an output voltage.

### <FIRST MODIFICATION>

A case where three or more insulating layers are provided will be described below as a modification of the cable according to the first embodiment. Consider a cable having a first insulating layer, a second insulating layer, ..., and an N-th insulating layer stacked on top of one another, N being a natural number not less than 3. The cable according to the present modification has a property biased toward positive polarity or negative polarity in the triboelectric series and includes the first insulating layer that coats a core, as in the first embodiment. The cable includes an (n+1)-th insulating layer which has a property biased toward a polarity opposite to a polarity of an n-th insulating layer and coats the n-th insulating layer, n being 1, ..., N-1. For example, if n = 1, the (n+1)-th insulating layer represents the second insulating layer that has a property biased toward a polarity opposite to a polarity of the first insulating layer and coats the first insulating layer. If n = 2, the (n+1)-th insulating layer represents a third insulating layer which has a property biased toward a polarity opposite to a polarity of the second insulating layer and coats the second insulating layer. The cable according to the present modification further includes a braid which coats the N-th insulating layer and a sheath which coats the braid. If N = 3, the cable has three insulating layers in total, and the third insulating layer is coated by the braid. If N = 5, the cable has five insulating layers in total, and a fifth insulating layer is coated by the braid.

If asperities are formed on an outer side surface and on an inner side surface of each insulating layer, as in the first embodiment, the insulating layers are well rubbed together when external force is applied to the cable. The formation is thus preferable.

The accuracy of detecting cable deformation can be enhanced by, for example, adopting Teflon as a material for each odd-numbered insulating layer and nylon as a material for each even-numbered insulating layer. The same applies to a case where the materials are interchanged (for example, nylon is adopted as the material for each odd-numbered insulating layer, and Teflon is adopted as the material for each even-numbered insulating layer).

Additionally, the accuracy of detecting cable deformation can be enhanced by, for example, adopting polyethylene as the material for each odd-numbered insulating layer and nylon as the material for each even-numbered insulating layer. The same applies to a case where the materials are interchanged (for example, nylon is adopted as the material for each odd-numbered insulating layer, and polyethylene is adopted as the material for each even-numbered insulating layer).

### [SECOND EMBODIMENT]

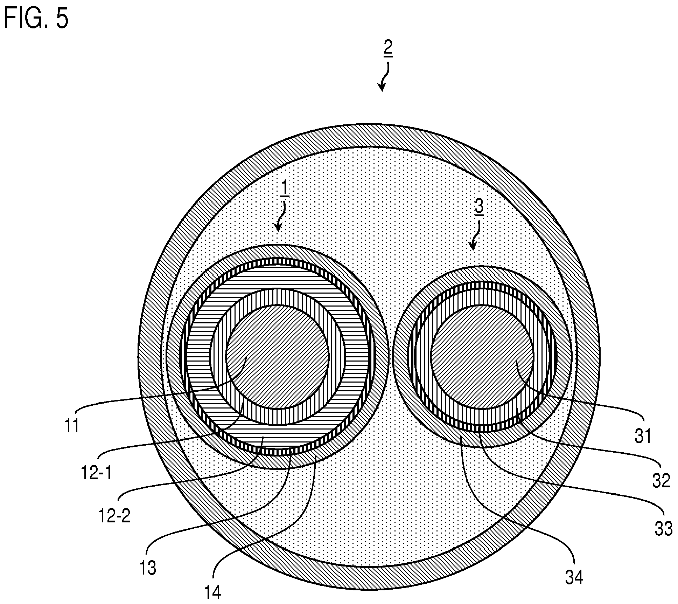

A two-core cable according to a second embodiment will be described below. As shown in Fig. 5, a two-core cable 2 according to the present embodiment is a cable with a two-core structure which includes a cable 1 according to the first embodiment and a cable 3 different in structure from the cable 1. As shown in Fig. 5, the cable 3 according to the present embodiment is structured to include a core 31, an insulating layer 32, a braid 33, and a sheath 34.

The insulating layer 32 coats the core 31. The braid 33 coats the insulating layer 32. The sheath 34 coats the braid 33. The core 31 of the cable 3 is short-circuited to the braid 33 both on a detection side and on a distal end side. This forms a loop in the cable 3 and allows reduction in electromagnetic noise.

As in the first embodiment, a first insulating layer 12-1 of the cable 1 has a property biased toward positive polarity or negative polarity in the triboelectric series (Fig. 3). A second insulating layer 12-2 has a property biased toward a polarity opposite to a polarity of the first insulating layer 12-1. The accuracy of detecting cable deformation can be enhanced by, for example, adopting a fluorine-based material having negative polarity as a material for the first insulating layer 12-1 and a nylon-based material having positive polarity as a material for the second insulating layer 12-2.

Use of fluorocarbon resin (Teflon) for the first insulating layer 12-1 allows a core 11 and the second insulating layer 12-2 to peel off easily from each other. Additionally, use of a braid 13 as an outer electrode allows the second insulating layer 12-2 and the braid 13 to peel off easily from each other.

Note that use of a high-melting-point material for the inner first insulating layer 12-1 and a low-melting-point material for the outer second insulating layer 12-2 makes it possible to mold the insulating layers through extrusion molding.

If asperities are formed on an outer side surface and on an inner side surface of each insulating layer, as in the first embodiment, the insulating layers are well rubbed together when external force is applied to the cable. The formation is thus preferable.

### <SECOND MODIFICATION>

As in the first modification, the number of insulating layers of the cable 1 according to the second embodiment may be set to not less than 3, and the cable 1 may be a cable having a first insulating layer, a second insulating layer, ..., and an N-th insulating layer stacked on top of one another, N being a natural number not less than 3. Since two or more types of cores, two or more types of insulating layers, two or more types of braids, two or more types of sheaths, and two or more types of cables are present, the components are numbered in the order of description. The components can be expressed in the manner below.

A first cable includes a first core, a first insulating layer, an (n+1)-th insulating layer, a first braid, and a first sheath, N being a natural number not less than 3, n being 1, ..., N-1.

The first insulating layer has a property biased toward positive polarity or negative polarity in the triboelectric series and coats the first core. The (n+1)-th insulating layer has a property biased toward a polarity opposite to a polarity of an n-th insulating layer and coats the n-th insulating layer. The first braid coats the N-th insulating layer. The first sheath coats the first braid.

A second cable includes a second core, an (N+1)-th insulating layer, a second braid, and a second sheath. The (N+1)-th insulating layer coats the second core, the second braid coats the (N+1)-th insulating layer, and the second sheath coats the second braid. The second core is short-circuited to the second braid both on a detection side and on a distal end side.

If asperities are formed on an outer side surface and on an inner side surface of each insulating layer, as in the first embodiment, the insulating layers are well rubbed together when external force is applied to the cable. The formation is thus preferable.

The accuracy of detecting cable deformation can be enhanced by, for example, adopting Teflon or polyethylene as a material for each odd-numbered insulating layer and nylon as a material for each even-numbered insulating layer. The same applies to a case where the materials are interchanged (for example, nylon is adopted as the material for each odd-numbered insulating layer, and Teflon or polyethylene is adopted as the material for each even-numbered insulating layer).

### <THIRD MODIFICATION>

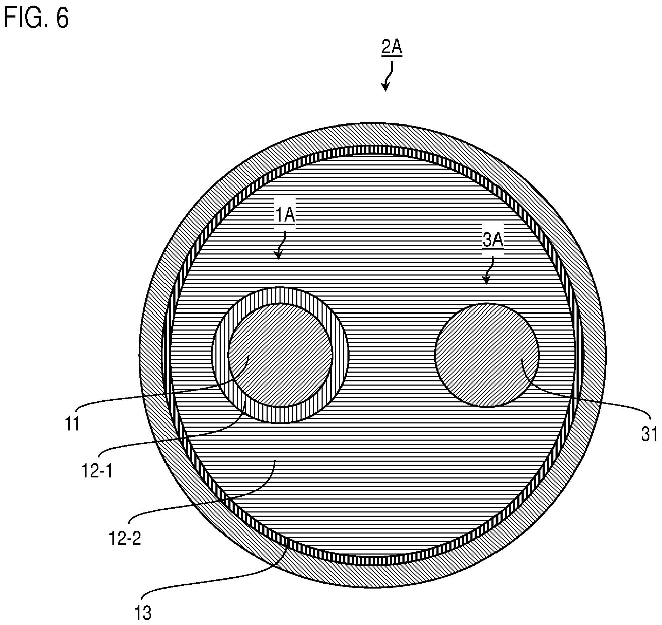

A two-core cable according to a third modification which is obtained by simplifying the structure of the two-core cable 2 according to the second embodiment will be described below with reference to Fig. 6. As shown in Fig. 6, a two-core cable 2A according to the present modification is a cable with a two-core structure which includes a cable 1A and a cable 3A. As shown in Fig. 6, the cable 1A includes the core 11 and the first insulating layer 12-1, the cable 3A includes the core 31, and the cable 1A and the cable 3A are coated by the second insulating layer 12-2. The second insulating layer 12-2 is coated by the braid 13, and the braid 13 is coated by a sheath of the two-core cable 2A.

### <FOURTH MODIFICATION>

As in the second modification, the number of insulating layers of the cable 1A according to the third modification may be set to not less than 2, and the cable 1A may be a cable having a first insulating layer, ..., and an N-th insulating layer stacked on top of one another, N being a natural number not less than 2. Since two or more types of cores, two or more types of insulating layers, and two or more types of cables are present, the components are numbered in the order of description. The components can be expressed in the manner below.

A first cable includes a first core, a first insulating layer, and an (n+1)-th insulating layer, N being a natural number not less than 2, n being 1, ..., N-1.

The first insulating layer has a property biased toward positive polarity or negative polarity in the triboelectric series and coats the first core. The (n+1)-th insulating layer has a property biased toward a polarity opposite to a polarity of an n-th insulating layer and coats the n-th insulating layer.

A second cable includes a second core. An (N+1)-th insulating layer coats the first cable and the second cable, and a braid coats the (N+1)-th insulating layer. The second core is short-circuited to the braid both on a detection side and on a distal end side.

If asperities are formed on an outer side surface and on an inner side surface of each insulating layer, as described above, the insulating layers are well rubbed together when external force is applied to the cable. The formation is thus preferable.

The accuracy of detecting cable deformation can be enhanced by, for example, adopting Teflon or polyethylene as a material for each odd-numbered insulating layer and nylon as a material for each even-numbered insulating layer. The same applies to a case where the materials are interchanged (for example, nylon is adopted as the material for each odd-numbered insulating layer, and Teflon or polyethylene is adopted as the material for each even-numbered insulating layer).

### <NOISE-REDUCTION EFFECT OF TWO-CORE CABLE>

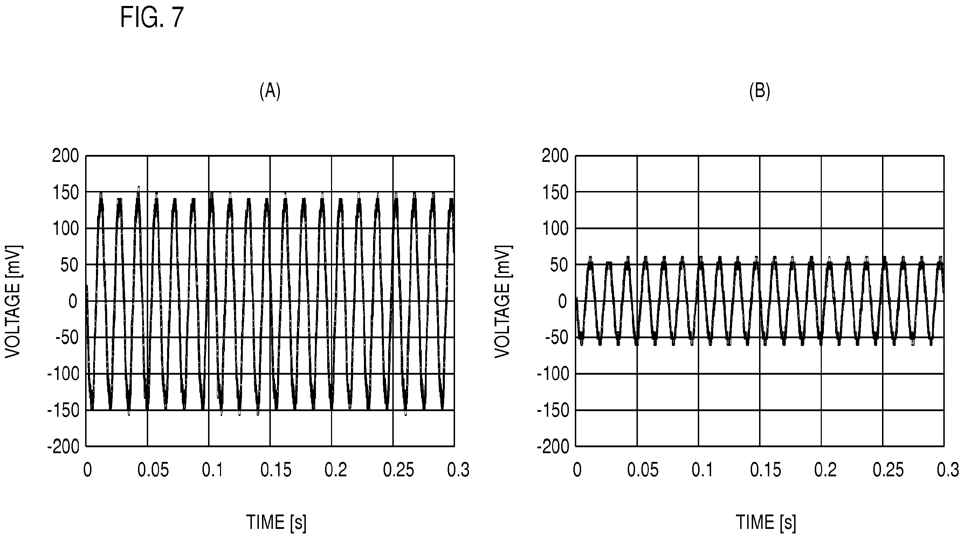

As shown in Fig. 7(A), a cable with a single-core structure illustrated in the first embodiment (or the first modification) has electromagnetic noise of about 300 mVpp. In contrast, as shown in Fig. 7(B), a cable with a two-core structure illustrated in the second embodiment (or the second, third, or fourth modification) has electromagnetic noise of about 100 mVpp. It is thus apparent that an electromagnetic-noise-reduction effect of the cable 3 (or 3A) reduces electromagnetic noise to about one-third.

As for the cables according to the embodiments and modifications, it is possible to sense with high accuracy that external force is applied to a cable or that the cable is bent by applying the principle of frictional electrification. The cables according to the embodiments and modifications are not impaired in electrification mechanism even when the cables are heated and do not require prior electrification processing.

The vibration power generator according to Patent Literature 1 uses an electret dielectric and adopts a mechanism in which a distance between the electret dielectric and an external electrode changes to generate power. If the distance between the electret dielectric and the external electrode does not change due to bending or the like, the vibration power generator may fail to function well. In contrast, in each of the cables according to the embodiments and modifications, since peeling of one of insulating layers from the other or friction between the insulating layers due to external force or bending generates power, even slight deformation can be detected with high accuracy.

The foregoing description of the embodiments of the invention has been presented for the purpose of illustration and description. It is not intended to be exhaustive and to limit the invention to the precise form disclosed. Modifications or variations are possible in light of the above teaching. The embodiment was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A cable (1) comprising:
a core (11);
a first insulating layer (12-1) that has a property biased toward positive polarity or negative polarity in a triboelectric series and coats the core (11);
an (n+1)-th insulating layer (12-2,...) that has a property biased toward a polarity opposite to a polarity of an n-th insulating layer (12-1,...) and coats the n-th insulating layer (12-1,...), N being a natural number not less than 2, n being 1, ..., N-1;
a braid (13) that coats the N-th insulating layer; and
a sheath (14) that coats the braid (13).

2. A two-core cable (2) comprising:
a first cable (1), the first cable (1) including
a first core (11),
a first insulating layer (12-1) that has a property biased toward positive polarity or negative polarity in a triboelectric series and coats the first core (11),
an (n+1)-th insulating layer (12-2,...) that has a property biased toward a polarity opposite to a polarity of an n-th insulating layer (12-1,...) and coats the n-th insulating layer (12-1,...), N being a natural number not less than 2, n being 1, ..., N-1,
a first braid (13) that coats the N-th insulating layer, and
a first sheath (14) that coats the first braid (13); and
a second cable (3), the second cable (3) including
a second core (31),
an (N+1)-th insulating layer (32) that coats the second core (31),
a second braid (33) that coats the (N+1)-th insulating layer (32), and
a second sheath (34) that coats the second braid (33), wherein
the second core (31) is short-circuited to the second braid (33) both on a detection side and on a distal end side.

3. A two-core cable (2A) comprising:
a first cable (1A), the first cable (1A) including
a first core (11), and
a first insulating layer (12-1) that has a property biased toward positive polarity or negative polarity in a triboelectric series and coats the first core (11);
a second cable (3A), the second cable (3A) including a second core (31);
a second insulating layer (12-2) that has a property biased toward a polarity opposite to a polarity of the first insulating layer (12-1) and coats the first cable (1A) and the second cable (3A); and
a braid (13) that coats the second insulating layer (12-2), wherein
the second core (31) is short-circuited to the braid (13) both on a detection side and on a distal end side.

4. A two-core cable (2A) comprising:
a first cable (1A), the first cable (1A) including
a first core (11),
a first insulating layer (12-1) that has a property biased toward positive polarity or negative polarity in a triboelectric series and coats the first core (11), and
an (n+1)-th insulating layer (12-2,...) that has a property biased toward a polarity opposite to a polarity of an n-th insulating layer (12-1,...) and coats the n-th insulating layer (12-1,...), N being a natural number not less than 2, n being 1, ..., N-1;
a second cable (3A), the second cable (3A) including a second core (31);
an (N+1)-th insulating layer that has a property biased toward a polarity opposite to a polarity of the N-th insulating layer and coats the first cable (1A) and the second cable (3A); and
a braid (13) that coats the (N+1)-th insulating layer, wherein
the second core (31) is short-circuited to the braid (13) both on a detection side and on a distal end side.

5. The cable according to any one of Claims 1 to 4, wherein asperities are formed on an outer side surface and on an inner side surface of each of the insulating layers.

6. The cable according to any one of Claims 1 to 5, wherein
an odd-numbered one of the insulating layers is made of Teflon, and
an even-numbered one of the insulating layers is made of nylon.

7. The cable according to any one of Claims 1 to 5, wherein
an odd-numbered one of the insulating layers is made of nylon, and
an even-numbered one of the insulating layers is made of Teflon.

8. The cable according to any one of Claims 1 to 5, wherein
an odd-numbered one of the insulating layers is made of polyethylene, and
an even-numbered one of the insulating layers is made of nylon.

9. The cable according to any one of Claims 1 to 5, wherein
an odd-numbered one of the insulating layers is made of nylon, and
an even-numbered one of the insulating layers is made of polyethylene.
